# EUROPÄISCHE PATENTSCHRIFT

(11) **EP 0 761 592 B1**
(45) Veröffentlichungstag und Bekanntmachung des Hinweises auf die Patenterteilung: **17.03.1999**
(21) Anmeldenummer: 96113048.1
(22) Anmeldetag: 14.08.1996
(51) Int. Cl.: B67D 5/60, F16L 39/00

(54) **Verteilvorrichtung zum wahlweisen Verbinden von Leitungen eines ersten Leitungsfeldes mit Leitungen eines zweiten Leitungsfeldes**
Distribution apparatus for selectively connecting pipelines of a first pipeline field with pipelines of a second pipeline field
Dispositif de distribution par connexion sélective entre un premier groupe de conduits et un deuxième groupe de conduits

(30) Priorität: 07.09.1995 DE 19532942
(43) Veröffentlichungstag der Anmeldung: 12.03.1997
(73) Patentinhaber: Skibowski, Martin, 22045 Hamburg (DE); Jakubik, Michael, 22045 Hamburg (DE)
(72) Erfinder: Skibowski, Martin, 22045 Hamburg (DE); Jakubik, Michael, 22045 Hamburg (DE)
(74) Vertreter: Patentanwälte Hauck, Graalfs, Wehnert, Döring, Siemons

(56) Entgegenhaltungen:
- EP-A- 0 254 764
- EP-A- 0 528 727
- EP-A- 0 567 986
- DE-A- 3 210 561
- DE-A- 4 325 731

## Beschreibung

Die Erfindung bezieht sich auf eine Verteilvorrichtung zum wahlweisen Verbinden von Leitungen eines ersten Leitungsfeldes mit Leitungen eines zweiten Leitungsfeldes nach dem Oberbegriff des Patentanspruchs 1.

Aus der GB 1 566 599 ist bekanntgeworden, zwischen den Enden der Leitungen eines ersten Leitungsfeldes und den Enden der Leitungen eines zweiten Leitungsfeldes S-förmige Rohrbogen anzuordnen, um die Enden wahlweise miteinander zu verbinden. Eine derartige Verteilvorrichtung ist mechanisch aufwendig und platzraubend. Sie birgt auch die Gefahr, daß eine falsche Verbindung hergestellt wird oder Produkt in die Umwelt gelangt.

Aus der FR 1 566 884 ist eine Verteilvorrichtung bekanntgeworden, bei der erste Kanalabschnitte und zweite Kanalabschnitte in Platten geformt sind. Außen angebrachte Armaturen dienen zum Verbinden einzelner Kanalabschnitte. Eine derartige Verteilvorrichtung ist jedoch in keiner Weise molchbar. Die zumindest teilweise Molchbarkeit wird jedoch in vielen Anwendungsfällen gefordert.

Aus der DE 32 10 558 ist eine Verteilvorrichtung bekannt, bei der mehrere Vaterkupplungsteile stationär angeordnet sind und benachbarte stationäre Kupplungsteile haben jeweils gleichen Abstand voneinander; ihre Stirnflächen liegen in einer Ebene. Zwei Mutterkupplungsteile sind an den Enden eines 180° Verteilerrohrbogens angebracht und haben einen Abstand voneinander, der dem Abstand benachbarter stationärer Vaterkupplungsteile entspricht. Bei derartigen Verteilvorrichtungen können normalerweise immer nur jeweils zwei Leitungen miteinander verbunden werden.

Aus der EP 0 254 764 ist ferner eine Verteilvorrichtung bekanntgeworden, bei der erste und zweite Leitungen jeweils eine bewegliche Verbindungsleitung aufweisen, die am freien Ende einen Verbindungskopf enthält. Die Verbindungsköpfe der ersten Leitungen werden mit Hilfe einer ersten Führung entlang paralleler erster Achsen und die Verbindungsköpfe der zweiten Leitungen mit Hilfe einer zweiten Führung entlang paralleler zweiter Achsen geführt. Die Verbindungsköpfe weisen abgewinkelte Endstücke auf, deren Enden Mutterkupplungsteile bzw. Vaterkupplungsteile so halten, daß sämtliche Stirnflächen annähernd in einer Kupplungsebene liegen. Eine derartige Verteilvorrichtung ist komplett molchbar, baut jedoch ebenfalls relativ groß. Die Ursache ist, daß zur Verbindung der Leitungen des ersten und zweiten Leitungsfeldes eine Verbindung jeweils erst mit Hilfe der beweglichen Verbindungsleitung hergestellt werden muß. Auch hier ist die Gefahr, daß eine Fehlverbindung oder ein Fehlanschluß erzeugt wird, nicht vermeidbar.

Der Erfindung liegt die Aufgabe zugrunde, eine Verteilvorrichtung zum wahlweisen Verbinden von Leitungen eines ersten und zweiten Leitungsfeldes miteinander zu schaffen, die relativ klein baut, in sich abgeschlossen ist und zumindest das Molchen der Leitungen eines Leitungsfeldes erlaubt.

Diese Aufgabe wird durch die Merkmale des Patentanspruchs 1 gelöst.

Die erfindungsgemäße Verteilvorrichtung sieht erste stationäre Kanäle vor, die mit den Leitungen des ersten Leitungsfeldes verbunden sind. Es kann sich zum Beispiel um Leitungen handeln, die mit den Tanks eines Tankfeldes in Verbindung stehen. Da die ersten stationären Kanäle nicht molchbar sind, werden sie nahe an die Tanks oder Reservoire herangeführt, deren Inhalt in Leitungen des zweiten Leitungsfeldes überführt werden soll. Die zweiten stationären Kanäle sind hingegen molchbar, haben zum Beispiel Kreisquerschnitt. Sie sind mit den Leitungen des zweiten Leitungsfeldes verbunden, das beispielsweise zu Füllmaschinen, Mischvorrichtungen o.ä. führt. Die zweiten Kanäle durchdringen die ersten Kanäle, welche jedoch einen durchgehenden Strömungskanal beibehalten. Vorzugsweise sind die ersten Kanäle im Vollsystem betrieben, d.h. ständig an die Versorgungsquelle angeschlossen, und zwar entweder unter deren statischem Druck oder dem Druck entsprechender Förderpumpen.

Jeder Durchdringungsabschnitt der zweiten Kanäle im ersten Kanal ist mit einer Absperrarmatur ausgestattet. Die Absperrarmatur weist ein Absperrorgan auf, das wahlweise eine Verbindung des Inneren des Durchdringungsabschnitts mit dem ersten Kanal herstellt oder absperrt. Das Absperrorgan ist mit einem Betätigungsorgan verbunden, das nach außerhalb des ersten Kanals geführt ist, damit es von einer geeigneten Betätigungsvorrichtung betätigt werden kann. Die Betätigungsvorrichtung ist mit einer geeigneten Steuervorrichtung verbunden, über die gesteuert wird, welches Betätigungsorgan betätigt werden soll, um die wahlweise Verbindung von beliebigen Leitungen des ersten Leitungsfeldes mit beliebigen Leitungen des zweiten Leitungsfeldes herzustellen. Dabei können auch mehrere Leitungen des ersten Leitungsfeldes mit mehreren Leitungen des zweiten Leitungsfeldes gleichzeitig verbunden werden.

Mit der erfindungsgemäßen Verteilvorrichtung ist eine Reihe von Vorteilen verbunden. Es handelt sich um ein geschlossenes Verteilersystem, aus dem Produkt nicht nach außen gelagt, zumindest nicht bei fehlerhafter Funktion. Arbeiten die Absperrorgane der Absperrarmaturen nicht zuverlässig, kommt es zwar zu unerwünschten Verbindungen und Produktströmungen, eine Beeinträchtigung der Umwelt tritt indessen nicht ein.

Die erfindungsgemäße Verteilvorrichtung baut klein. Die ersten Kanäle können sehr eng nebeneinander angeordnet werden, so daß die zweiten Kanäle fast ausschließlich von Durchdringungsabschnitten gebildet sind. Die erfindungsgemäße Verteilvorrichtung ist darüber hinaus beliebig erweiterbar. Durch Verlängerung der ersten Kanäle können mehr Leitungen des zweiten Leitungsfeldes angeschlossen werden. Umgekehrt kann eine Erhöhung der Anzahl der ersten Kanäle die Anschlußmöglichkeit an Leitungen des ersten Leitungsfeldes erhöhen.

Die erfindungsgemäße Verteilvorrichtung hat ferner den Vorteil, daß sie bis zu den Anschlüssen im Hinblick auf die zweiten Kanäle molchbar ist. Für viele Fälle, in denen ein Molchsystem vorgesehen ist, ist dies vollständig ausreichend. Es wurde weiter oben erläutert, daR es zum Beispiel zweckmäßig sein kann, die Verteilvorrichtung sehr nahe an die Reservoire für die flüssigen Produkte heranzubringen. Umgekehrt kann es auch zweckmäßig sein, die Verteilvorrichtung sehr nahe an den Anwendungsbereich für die Produkte heranzubringen, beispielsweise an Füllmaschinen, Mischvorrichtungen oder dergleichen. In diesem Fall sind dann die Verbindungsleitungen zu den Reservoiren molchbar, beispielsweise die Tankleitungen zu den Tanks in einem Tankfeld.

Die erfindungsgemäße Verteilvorrichtung ist automatisch oder von Hand bedienbar, je nach Ausführung. Für eine automatische Steuerung ist nur ein geringer Aufwand erforderlich.

Schließlich ermöglicht die erfindungsgemäße Verteilvorrichtung ein Mischen in der Verteilvorrichtung selbst sowie auch ein Umpumpen zwischen einzelnen Tanks, wenn die Armaturen entsprechend angesteuert werden.

Die ersten Kanäle der erfindungsgemäßen Verteilvorrichtung können in einem Block oder dergleichen ausgebildet sein, der von den zweiten Kanälen durchdrungen wird. Es ist jedoch vorteilhaft, wenn die ersten Kanäle von ersten Rohren gebildet sind, die zwei parallele, den zweiten Kanälen zugekehrte Wandabschnitte aufweisen, beispielsweise Rohre mit länglichem Vierkantquerschnitt. Derartige Profilrohre können gegossen oder gezogen werden und sind handelbare Teile.

Die Armaturen für die Durchdringungsabschnitte in den ersten Kanälen können bekannte Absperrorgane sein, zum Beispiel Keilschieber, Hülsenschieber, Kugelküken oder dergleichen. Nach einer Ausgestaltung der Erfindung wird das Absperrorgan von einem Ringschieber gebildet, der in der Sperrstellung einen mit dem Strömungsquerschnitt fluchtenden Durchgang bildet und einen seitlichen Abgang aus dem zweiten Kanal sperrt und in der Öffnungsstellung radial zum zweiten Kanal verschoben ist in den ersten Kanal hinein und den seitlichen Abgang freigibt. Ein derartiges Absperrorgan ist aus der DE 32 10 561 bekanntgeworden. Es dient zur wahlweisen Absperrung einer T-förmigen Rohrleitungsverzweigung, die ohne Restmengen molchbar sein soll. Ein ringförmiges Absperrorgan dieser Art hat auch den Vorteil, daß es als Molchfänger dient, wenn es ganz oder teilweise in die Öffnungsstellung gefahren ist. Vorzugsweise ist eine Dichtungsanordnung an den beiden Stirnseiten des Ringschiebers vorgesehen.

Nach einer anderen Ausgestaltung der Erfindung ist der Durchdringungsabschnitt von zwei Rohrstücken gebildet, die an gegenüberliegenden Seiten in das erste Rohr eingesetzt sind und deren einander zugekehrte Enden einen Spalt bilden, in dem das Verstellorgan, beispielsweise der Ringschieber, dichtend verschiebbar aufgenommen ist.

Wenn die Durchdringungsabschnitte nur geringfügig aus den ersten Rohren vorstehen, können die Durchdringungsabschnitte oder die ersten Rohre quer zur Längsrichtung der ersten Rohre so gegeneinander gespannt werden, daß die vorstehenden Abschnitte der Durchdringungsabschnitte dichtend gegeneinander liegen. Es versteht sich, daß ein derartiges "Paket" zum Beispiel dadurch erweitert werden kann, daß ein weiteres Rohr mit den entsprechenden Durchdringungsabschnitten verwendet wird, das mit den bereits vorhandenen in der beschriebenen Art und Weise verspannt wird.

Es ist zwar denkbar, die Betätigungsorgane, beispielsweise Verstellwellen oder Verstellstangen separat an einer geeigneten Betätigungsvorrichtung anzubringen. Es ist jedoch nach einer Ausgestaltung der Erfindung vorteilhaft, die Betätigungsorgane auf den ersten Rohren anzubringen. Sind die Betätigungsorgane für einen zweiten Kanal in einer Reihe angeordnet, braucht pro Reihe lediglich eine Betätigungsvorrichtung vorgesehen zu werden, die mittels eines Fahrantriebs entlang der Reihe verfahrbar ist. Der Aufwand für die Betätigung wird daher stark reduziert. So kann das Betätigungsorgan zum Beispiel eine federvorgespannte Betätigungsstange sein, die von einem Betätigungszylinder betätigt wird, wenn er mit Hilfe einer geeigneten Vorkehrung mit der Betätigungsstange ausgerichtet wird. Diese Vorkehrung kann zum Beispiel in einem geeigneten Lineartrieb, zum Beispiel einem Zahnriemen, bestehen, um die entsprechende Ausrichtung zwischen Betätigungsvorrichtung, beispielsweise ein Betätigungszylinder und Betätigungsstange vorzunehmen. Zu diesem Zweck kann jede Betätigungsstange einen Führungsabschnitt aufweisen, und der Betätigungszylinder weist einen Schlitten auf, der mit den Führungsabschnitten zusammenwirkt. Um eine geeignete ausreichende Führung zu erhalten, ist es vorteilhaft, wenn der Schlitten eine derartige Länge aufweist, daß er auch jeweils benachbarte Führungsabschnitte erfaßt.

Die Erfindung wird nachfolgend anhand von Ausführungsbeispielen näher erläutert.
- Fig. 1: zeigt äußerst schematisch die Verteilervorrichtung nach der Erfindung in Verbindung mit einem ersten und zweiten Leitungsfeld.
- Fig. 2: zeigt die Draufsicht auf erste Kanäle der Verteilervorrichtung nach Fig. 1.
- Fig. 3: zeigt eine Ansicht der Kanalanordnung nach Fig. 2 in Richtung Pfeil 3.
- Fig. 4: zeigt eine Ansicht der Darstellung nach Fig. 3 in Richtung Pfeil 4.
- Fig. 5: zeigt einen Schnitt durch die Darstellung nach Fig. 4 entlang der Linie 4-4.
- Fig. 6: zeigt eine Seitenansicht der Darstellung nach Fig. 5 in Richtung Pfeil 6.
- Fig. 7: zeigt eine Draufsicht auf die Darstellung nach Fig. 6 in Richtung Pfeil 7.

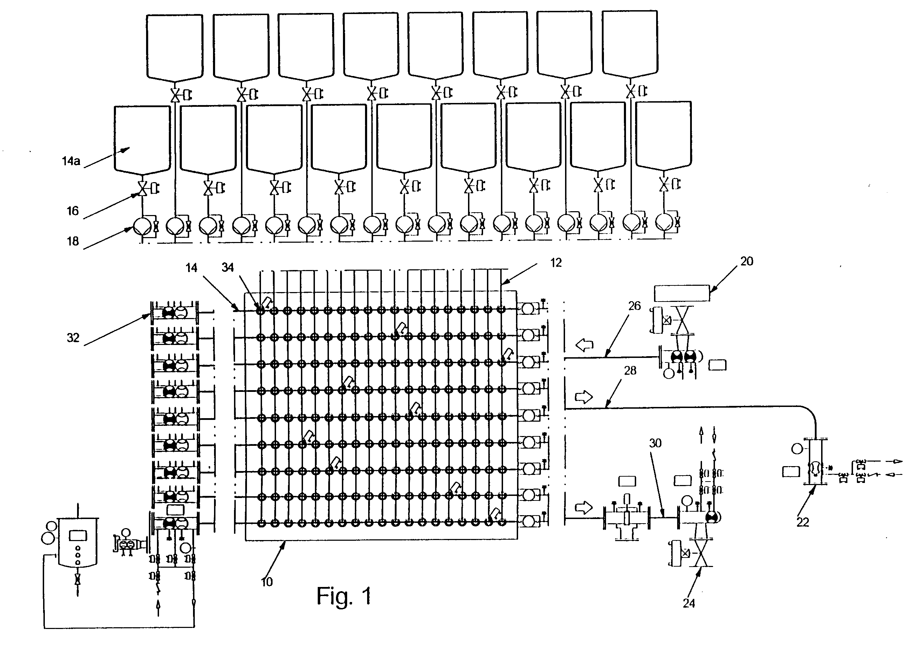

In Fig. 1 ist eine matrixartige Verteilervorrichtung 10 angedeutet mit ersten Kanälen 12, die in den Spalten der Matrix angeordnet sind und zweiten Kanälen 14, die in den Zeilen der Matrix angeordnet sind. Jeder Kanal 12 ist mit einem der Tanks 14a über eine Armatur 16 und eine Pumpe 18 verbunden. Die Kanäle 12 werden im Vollbetrieb gefahren, d.h. sie sind ständig mit dem Produkt des zugehörigen Tanks 14a gefüllt. Die Kanäle 14 sind mit Apparaturen oder Behältern verbunden, in die Produkt von den Tanks hineingefördert werden soll. So ist eine Mischvorrichtung 20 angedeutet, und Füllmaschine 22, 24 angeschlossen. Der Anschluß erfolgt über Leitungen 26, 28 bzw. 30, die eine erhebliche Länge haben können. Die Kanäle 12 sind hingegen nahe am Tankfeld angeordnet. Die Kanäle 14 und die Leitungen 26, 28 und 30 sind molchbar. An den gegenüberliegenden Enden der Kanäle 14 sind Molchfang- und Sendestationen 32 angeordnet. Auf diese wird im einzelnen nicht näher eingegangen.

An den Kreuzungspunkten 34 der Kanäle 12 und 14 sind Armaturen angeordnet, die ferngesteuert oder handbetätigt sein können. Mit Hilfe der Armaturen kann ein beliebiger Kanal 12 mit einem beliebigen Kanal 14 verbunden werden. Anhand der nachfolgenden Figuren wird dies näher erläutert.

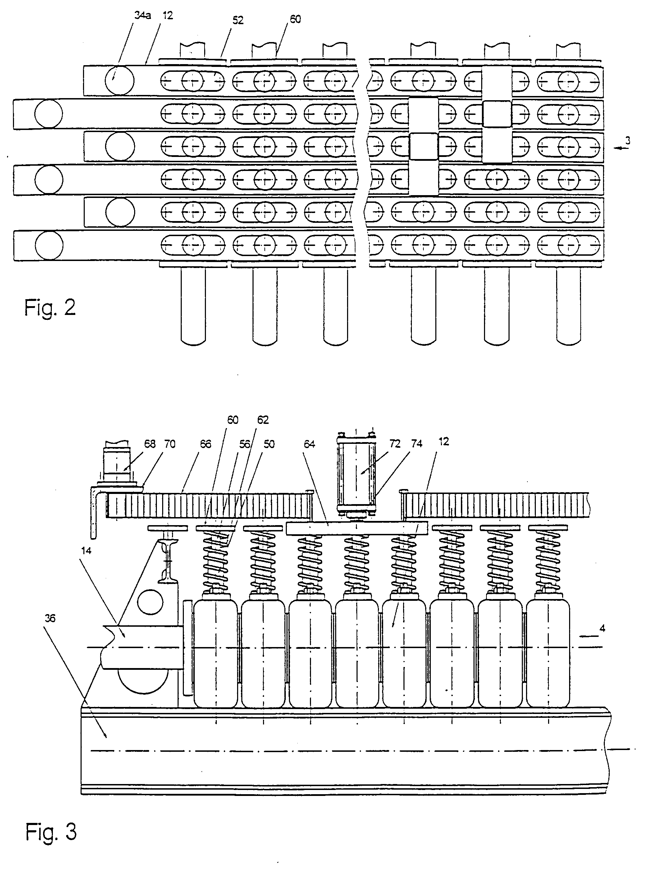

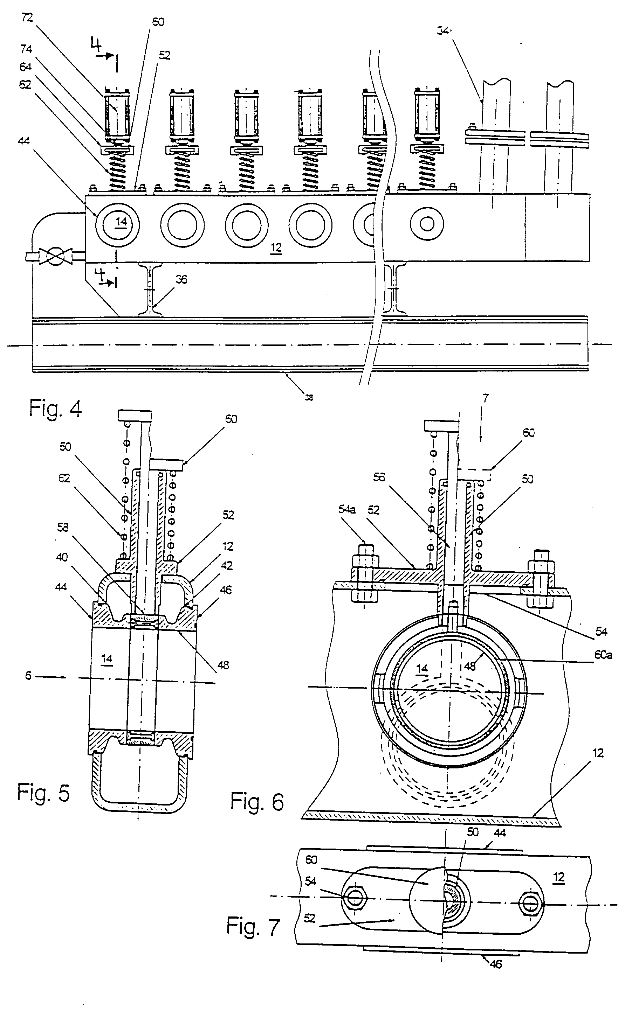

Aus den Figuren 2, 3 und 5 ist zu entnehmen, daß die Kanäle 12 im Querschnitt Rechteckprofil aufweisen. Sie sind eng nebeneinander und parallel zueinander angeordnet (Fig. 2) und können an den Enden 34a mit den Tanks verbunden werden. Kanäle 12 sind über Doppel-T-Profile 36 abgestützt, die ihrerseits auf einem Rahmen 38 der Vorrichtung 10 abgestützt sind. An den gegenüberliegenden Flachseiten der Kanäle 12 sind Öffnungen 40, 42 geformt, in die gemäß Fig. 5 Rohrstücke 44 bzw. 46 dichtend eingesetzt sind. An den einander zugekehrten Enden haben die Rohrstücke 44, 46 einen Abstand voneinander. Wie aus Fig. 3 ersichtlich, sind die ersten Kanäle 12 so eng zusammen angeordnet, daß die einander zugekehrten Rohrstücke 44, 46 gegeneinanderliegen und einen Durchgang 48 bilden, der sich quer durch alle Kanäle 12 erstreckt. Die Kanäle 12 können "im Paket" durch geeignete Vorkehrungen (nicht gezeigt) zusammengespannt werden. Der Durchgang 48 hat einen einheitlichen Durchmesser, ist daher molchbar. Auf diese Weise werden die zweiten Kanäle 14, welche mithin die ersten Kanäle 12 durchdringen, gebildet. Wie aus Fig. 4 zu ersehen, kann der Durchmesser der zweiten Kanäle 14 unterschiedlich sein.

Oberhalb jedes Durchdringungspunktes der Kanäle 14 ist auf den Kanälen 12 eine buchsenartige Führung 50 befestigt, und zwar mittels eines länglichen Flansches 52, der mittels Schrauben 54a am Kanal 12 befestigt ist. Der Kanal 12 weist in diesem Bereich eine Öffnung 54 auf, durch die sich ein Abschnitt der Führung 50 in den Kanal 12 hineinerstreckt. In der Führung 50 ist ein Betätigungsorgan 56 in Form einer Stange verschiebbar gelagert, die am unteren Ende einen Ringschieber 58 hält. Der Ringschieber weist auf gegenüberliegenden Stirnseiten Ringdichtungen 60a auf, wie in Fig. 6 dargestellt. Dadurch kann sich der Ringschieber 58 gleitend und dichtend im Spalt zwischen den Rohrstücken 44, 46 bewegen. Der Innendurchmesser des Ringschiebers 58 entspricht dem der Rohrstücke 44, 46 bzw. des Durchgangs 48. In Fig. 5 ist der Ringschieber 58 in Schließstellung gezeigt. In Fig. 6 ist die Offenstellung in strichlierten Linien angedeutet. In dieser ist dann über den nahezu vollständig freien Spalt eine Verbindung zwischen den Kanälen 12, 14 hergestellt. Die Stangen haben am oberen freien Ende eine Führungsplatte 60, gegen die eine Feder 62 anliegt, die am anderen Ende am Flansch 52 abgestützt ist. Dadurch wird der Ringschieber 58 in die Schließstellung vorgespannt.

Wie sich aus Fig. 2 ergibt, liegen die Führungsplatten 60 eines Kanals 12 in Reihe. Ebenso liegen die Führungsplatten 60 in Querrichtung dazu in Reihe. Zu jeder dieser letzteren Reihe gehört ein Führungsschlitten 64 von U-förmigem Querschnitt, mit dem die Führungsplatten 60 zusammenwirken. Der Schlitten 64 ist an einem Zahnriemen 66 aufgehängt, der von einem geeigneten Antriebsmotor 68 angetrieben ist, der auf einer geeigneten Halterung 70 angeordnet ist. Die Länge des Schlittens 64 ist derart, daß jeweils drei benachbarte Führungsplatten 60 aufgenommen werden können (Fig. 3). Auf jedem Schlitten 64 sitzt eine Betätigungsvorrichtung in Form eines Betätigungszylinders, dessen Kolbenstange 74 durch eine nicht gezeigte Öffnung im Steg des Schlittens 64 hindurchführbar ist zur Betätigung der Stange, wenn der Zylinder zu der betreffenden Stange ausgerichtet ist. Auf diese Weise lassen sich die einzelnen Armaturen bzw. Ringschieber 58 in den Kreuzungspunkten 34 der Verteilermatrix betätigen.

Man erkennt, daß jeder der ersten Kanäle 12 mit jedem der Kanäle 14 verbunden werden kann. Das betriebene Verteilersystem ist geschlossen ausgeführt, d.h. auch bei Fehlschaltungen kann Produkt nicht nach außen gelangen. Die Kanäle 14 sind molchbar, was in vielen Anwendungsfällen erwünscht ist. Dabei können die Ringschieber 58 in der offenen Stellung (Fig. 6) als Molchfangvorrichtung dienen. Wie ferner leicht erkennbar, läßt sich die Anzahl der ersten und zweiten Kanäle 12, 14 beliebig erweitern. Zu diesem Zweck sind weitere Kanäle 12 vorzusehen bzw. in ihrer Länge zu vergrößern.

Es ist ferner zu erkennen, daß die Verteilervorrichtung auch ermöglicht, eine Verbindung mit den Tanks 14a untereinander herzustellen und die Tanks über die zweiten Kanäle 14 zu befüllen.

## Patentansprüche

1. Verteilervorrichtung zum wahlweisen Verbinden von Leitungen eines ersten Leitungsfeldes mit Leitungen eines zweiten Leitungsfeldes, gekennzeichnet durch folgende Merkmale:
- erste stationäre Kanäle (12), die mit den Leitungen des ersten Leitungsfeldes verbunden sind,
- zweite stationäre Kanäle (14) mit molchbarem Querschnitt, die mit den Leitungen des zweiten Leitungsfeldes verbunden werden und die ersten Kanäle (12) quer durchdringen, jedoch eine Strömung im ersten Kanal (12) zulassen,
- jeweils eine Absperrarmatur für die in den ersten Kanälen (12) liegenden Durchdringungsabschnitte der zweiten Kanäle (14), deren Absperrorgan eine Verbindung zwischen dem jeweiligem Durchdringungsabschnitt und einem ersten Kanal (12) wahlweise freigibt oder sperrt und deren Betätigungsorgan (56) nach außerhalb des ersten Kanals (12) geführt ist und
- eine Betätigungsvorrichtung (72) für das Betätigungsorgan (56).

2. Vorrichtung nach Anspruch 1, dadurch gekennzeichnet, daß die ersten Kanäle (12) von ersten Rohren gebildet sind, die zwei parallele, den zweiten Kanälen (14) zugekehrte Wandabschnitte aufweisen.

3. Vorrichtung nach Anspruch 2, dadurch gekennzeichnet, daß die Rohre im Querschnitt einen länglichen Vierkant bilden.

4. Vorrichtung nach einem der Ansprüche 1 bis 3, dadurch gekennzeichnet, daß die zweiten Kanäle (14) Kreisquerschnitt haben und das Absperrorgan ein Ringschieber (58) ist, der in der Sperrstellung einen mit dem Strömungsquerschnitt eines zweiten Kanals (14) fluchtenden Durchgang bildet und einen seitlichen Abgang aus einem zweiten Kanal (14) sperrt und in der Öffnungsstellung radial gegenüber dem zweiten Kanal (14) verschiebbar ist in den ersten Kanal (12) hinein und den seitlichen Abgang freigibt.

5. Vorrichtung nach Anspruch 4, dadurch gekennzeichnet, daß an beiden Stirnseiten Ringdichtungen (60a) in den Ringschieber (58) eingelassen sind.

6. Vorrichtung nach Anspruch 2 oder 4, dadurch gekennzeichnet, daß der Durchdringungsabschnitt von zwei Rohrstücken (44, 46) gebildet ist, die an gegenüberliegenden Seiten in den ersten Kanal (12) eingesetzt sind und deren einander zugekehrte Enden einen Spalt bilden, in dem der Ringschieber (58) dichtend verschiebbar aufgenommen ist.

7. Vorrichtung nach einem der Ansprüche 2 bis 6, dadurch gekennzeichnet, daß die Durchdringungsabschnitte geringfügig aus dem ersten Kanal (12) vorstehen und die ersten Kanäle (12) quer zur Längsrichtung so gegeneinander gespannt sind, daß die vorstehenden Abschnitte der Durchdringungsabschnitte dichtend gegeneinander liegen.

8. Vorrichtung nach einem der Ansprüche 2 bis 7, dadurch gekennzeichnet, daß die Betätigungsorgane (56) auf den ersten Kanälen angebracht sind.

9. Vorrichtung nach Anspruch 8, dadurch gekennzeichnet, daß die Betätigungsorgane (56) für einen zweiten Kanal (14) in einer Reihe angeordnet sind und pro Reihe eine Betätigungsvorrichtung (72) vorgesehen ist, die mittels eines Fahrantriebs entlang der Reihe verfahrbar ist.

10. Vorrichtung nach Anspruch 9, dadurch gekennzeichnet, daß eine federvorgespannte Betätigungsstange als Betätigungsorgan (56) vorgesehen ist und die Betätigungsvorrichtung von einem Betätigungszylinder gebildet ist.

11. Vorrichtung nach Anspruch 10, dadurch gekennzeichnet, daß die Betägigungsstange am äußeren Ende einen Führungsabschnitt (60) aufweist, der mit einem Führungsschlitten (64) zusammenwirkt, an dem der Betätigungszylinder sitzt und der von einem Linearantrieb antreibbar ist.

12. Vorrichtung nach Anspruch 11, dadurch gekennzeichnet, daß der Schlitten (64) eine Länge aufweist, daß er auch mit den jeweils benachbarten Führungsabschnitten zusammenwirkt.

## Claims

1. A distribution assembly for the selective connection of fluid lines of a first group of lines with fluid lines of a second group of lines, characterized by the following features:
- first stationary ducts (12) connected to said lines of said first group of lines,
- second stationary ducts (14) connected to said lines of said second group of lines, said ducts having a cross section adapted to be cleaned by a line scraper, said ducts further extending through said first ducts so as still to allow for fluid flow through said first duct (12),
- shutoff valves for the through-flow portions of said second ducts (14) located in said first ducts (12), said valves having valve members for selectively enabling or preventing fluid communication between the respective intersecting portion and first duct (12), and the actuating members (56) of said valve members extending outwardly of said first ducts (12), and
- actuation means (72) for said actuating member (56).

2. The assembly of claim 1, characterized in that said first ducts (12) are defined by first tubes having two parallel opposing wall portions facing said second ducts (14).

3. The assembly of claim 2, characterized in that said tubes are of an oblong rectangular cross section.

4. The assembly of any of claims 1 to 3, characterized in that said second ducts (14) are of a circular cross section and said shutoff valve member is an annular valve member (58) forming a passage which is aligned with the flow cross section area of said second ducts (14), said annular valve member shutting off a lateral outlet of said second duct (14) and being radially displaceable relative to said second duct (14) and projecting into said first duct (12) in the opening position thereof to open said lateral outlet.

5. The assembly of claim 4, characterized in that sealing rings (60a) are located at both faces of said annular valve member (58).

6. The assembly of claim 2 or 4, characterized in that said intersecting portion is formed by two tube pieces (44, 46) which are inserted on opposing sides into said first duct (12), the facing ends of said tube pieces forming a gap, and said annular valve member (48) being sealingly displaceable within said gap.

7. The assembly of any of claims 2 to 6, characterized in that said intersecting portions (44, 46) project slightly beyond said first duct, and said first ducts (12) are clamped together transverse to the longitudinal direction thereof, so that the projecting portions of said through-flow portions (44, 46) abut each other sealingly.

8. The assembly of any of claims 2 to 7, characterized in that said actuation members (56) are mounted on said first ducts (12).

9. The assembly of claim 8, characterized in that said actuation members (56) for said second duct (14) are located in a row, and one of said actuation means (72) is provided for each row and can be moved along the row through suitable driving means (68, 66).

10. The assembly of claim 9, characterized in that a spring-biased actuating rod is provided to define said actuating member (56), and said actuation means (72) is defined by an actuating cylinder.

11. The assembly of claim 10, characterized in that said actuating rod has at its outer end a guide portion (60) co-operating with a guide slide (64) to which said actuation cylinder is connected, said guide portion being driven by a linear driving means.

12. The assembly of claim 11, characterized in that said slide (64) is of a length so as to co-operate also with the respective adjacent guide portions.

## Revendications

1. Dispositif répartiteur pour la connexion sélective de canalisations d'un premier champ de canalisations avec des canalisations d'un deuxième champ de canalisations, caractérisé en ce qu'il comprend
- des premiers canaux stationnaires (12), qui sont connectés aux canalisations du premier champ de canalisations,
- des deuxièmes canaux stationnaires (14) à section transversale raclable, qui sont connectés aux canalisations du deuxième champ de canalisations et traversent transversalement les premiers canaux (12), tout en permettant un écoulement dans le premier canal (12),
- respectivement un appareil de sectionnement pour les parties de traversée des deuxièmes canaux (14) situées dans les premiers canaux (12), dont l'organe d'arrêt libère ou ferme au choix une connexion entre la partie de traversée respective et un premier canal (12) et dont l'organe de commande (56) est guidé vers l'extérieur du premier canal (12) et
- un dispositif de commande (72) pour l'organe de commande (56).

2. Dispositif selon la revendication 1, caractérisé en ce que les premiers canaux (12) sont formés de premiers tubes qui comportent deux parties de parois parallèles, adjacentes aux deuxièmes canaux (14).

3. Dispositif selon la revendication 2, caractérisé en ce que les tubes ont une section transversale quadrangulaire oblongue.

4. Dispositif selon l'une des revendications 1 à 3, caractérisé en ce que les deuxièmes canaux (14) ont des sections transversales circulaires et que l'organe d'arrêt est un tiroir annulaire (58), qui, en position d'arrêt, forme un passage affleurant avec la section transversale d'écoulement d'un deuxième canal (14) et ferme une sortie latérale d'un deuxième canal (14) et, en position d'ouverture, peut être déplacé, radialement par rapport au deuxième canal (14) en pénétrant dans le premier canal (12) et libère la sortie latérale.

5. Dispositif selon la revendication 4, caractérisé en ce que, sur les deux faces, des garnitures d'étanchéité annulaires (60a) sont enchâssées dans les tiroirs annulaires (58).

6. Dispositif selon l'une des revendications 2 ou 4, caractérisé en ce que la partie de traversée est formée de deux tronçons de tubes (44, 46), qui sont placés sur des côtés opposés dans le premier canal (12) et dont les extrémités adjacentes l'une à l'autre forment une fente dans laquelle le tiroir annulaire (58) peut se déplacer en faisant étanchéité.

7. Dispositif selon l'une des revendications 2 à 6, caractérisé en ce que les parties de traversées dépassent légèrement du premier canal (12) et que les premiers canaux (12) sont serrés l'un contre l'autre perpendiculairement à la direction longitudinale de telle manière que les parties dépassantes des parties de traversée reposent l'une sur l'autre en faisant étanchéité.

8. Dispositif selon l'une des revendications 2 à 7, caractérisé en ce que les organes de commande (56) sont placés sur les premiers canaux.

9. Dispositif selon la revendication 8, caractérisé en ce que les organes de commande (56) pour un deuxième canal (14) sont placés en série et qu'il est prévu par série un dispositif de commande (72) qui peut être déplacé le long de la série au moyen d'un organe de translation.

10. Dispositif selon la revendication 9, caractérisé en ce qu'une barre de commande sollicitée par ressort est prévue comme organe de commande (56) et que le dispositif de commande est formé d'un cylindre de commande.

11. Dispositif selon la revendication 10, caractérisé en ce que la barre de commande comporte à l'extrémité extérieure une partie de guidage (60) qui coopère avec un chariot de guidage (64) sur lequel repose le cylindre de commande et qui peut être entraîné par un entraînement linéaire.

12. Dispositif selon la revendication 11, caractérisé en ce que le chariot (64) a une longueur telle qu'il coopère aussi avec les parties de guidage respectivement voisines.
